# EUROPÄISCHE PATENTSCHRIFT

(11) **EP 2 338 085 B1**
(45) Veröffentlichungstag und Bekanntmachung des Hinweises auf die Patenterteilung: **14.11.2012**
(21) Anmeldenummer: 09749037.9
(22) Anmeldetag: 08.10.2009
(51) Int. Cl.: G03B 3/12, G03B 13/34, H04N 5/232

(54) **VERFAHREN ZUM EINSTELLEN UND ZUR ANZEIGE DER EINSTELLUNG EINES KAMERAOBJEKTIVS**
METHOD FOR ADJUSTING AND FOR DISPLAYING THE ADJUSTMENT OF A CAMERA LENS
PROCEDE DE REGLAGE ET D'AFFICHAGE DU REGLAGE D'UN OBJECTIF DE CAMERA

(30) Priorität: 20.10.2008 DE 102008052472
(43) Veröffentlichungstag der Anmeldung: 29.06.2011
(73) Patentinhaber: Arnold&Richter Cine Technik GmbH&Co. Betriebs KG, 80799 München (DE)
(72) Erfinder: RICHTER, Claus, 45721 Haltern am See (DE)
(74) Vertreter: Ninnemann, Detlef
(86) Internationale Anmeldenummer: PCT/EP2009/063074
(87) Internationale Veröffentlichungsnummer: WO 2010/046237

(56) Entgegenhaltungen:
- DE-A1- 4 219 331
- US-A- 4 618 238
- US-A- 4 731 630
- US-A- 5 218 399
- US-A1- 2003 011 692
- US-A1- 2003 025 802
- US-A1- 2005 140 816

## Beschreibung

Die Erfindung betrifft ein Verfahren zum Einstellen und zur Anzeige der Einstellung eines Kameraobjektivs, insbesondere zur Einstellung der Bildschärfe (Fokus) eines Kameraobjektivs für analoge oder digitale Laufbildkameras, gemäß dem Oberbegriff des Anspruchs 1 sowie eine Vorrichtung zur Durchführung des Verfahrens.

Eine Einstellung der Irisblendenöffnung, der Bildschärfe (Fokus) und der Brennweite (Zoom) kann an den Objektivringen eines Kameraobjektives vorgenommen werden. Zur einfacheren und zuverlässigeren Einstellung von Kameraobjektiven werden aber bevorzugt Bedienelemente verwendet, die entweder an der Laufbildkamera selbst angebracht oder als Fernbedienungen ausgebildet sind. Zu diesem Zweck sind an einem Kameraobjektiv mehrere Motoreinheiten angeordnet, die jeweils über ein Zahnritzel ein Drehmoment auf den Zahnkranz eines Objektivringes übertragen und auf diese Weise eine Einstellung des Objektivringes bewirken. Die einzelnen Motoreinheiten sind dabei mit einer Kontrolleinheit verbunden, die wiederum über eine Bedieneinheit gesteuert wird.

Insbesondere die Bildschärfeneinstellung (Fokus) einer Laufbildkamera wird üblicherweise nicht direkt am Objektivring des Kameraobjektivs vorgenommen, sondern an einer sogenannten Schärfenzieheinrichtung, die einem Kameraassistenten eine zweckmäßigere Benutzeroberfläche bietet und gegenüber einer Verstellung am Objektivring die Vorteile einer bequemeren Bedienposition, einer feineren Übersetzung der Bedienbewegung bei der Bildschärfenverstellung, eine optionale Fernbedienbarkeit, die Anzeige von Zusatzinformationen wie beispielsweise die jeweilige Tiefenschärfe sowie die Möglichkeit der Markierung bestimmter Entfernungseinstellungen, die beispielsweise mit ausgemessenen Positionen im Motiv übereinstimmen.

Aus der DE 42 19 331 A1 ist ein Steuersystem für Kameraobjektive bekannt, das aus einer Handbedieneinheit zum Einstellen der Brennweite, der Bildschärfe und der Irisblendenöffnung eines Kameraobjektivs, Motoreinheiten zur Bildschärfeneinstellung, Brennweiteneinstellung und Irisblendeneinstellung sowie einem Kamera-Akkumulator besteht. Die Motoreinheiten übertragen zur Brennweiten-, Bildschärfen- und Irisblendeneinstellung über Ritzel jeweils ein Drehmoment auf die entsprechenden Objektivringe des Kameraobjektivs. Die Handbedieneinheiten weisen jeweils ein Handrad auf, das ähnlich wie bei einer mechanischen Schärfenzieheinrichtung mit abnehmbaren Skalenscheiben und verschiebbaren, mechanisch justierbaren Endanschlägen ausgebildet ist. Mittels der verschiebbaren Endanschläge kann der Benutzer bestimmte Eckwerte seiner Verstellung einstellen, wofür zusätzlich oder alternativ eigene Markierungen auf den Skalenscheiben angebracht werden können.

Zur präzisen Einstellung des Schärfen- und Blendenringes sind Bedienelemente zur elektronischen Einstellung und Eingrenzung des Bereichs vorgesehen, über den die Bildschärfe und Bildblende verändert werden kann. Auf diese Weise kann der Verstellbereich beliebig eingegrenzt werden. Für den eingegrenzten Bereich steht jedoch der volle Drehbereich des Handrades der Bedieneinheiten innerhalb der eingestellten Handrad-Endanschläge zur Verfügung, so dass die Einstellung des Schärfen- und Blendenringes äußerst präzise erfolgen kann. Dies entspricht der bei mechanischen Schärfenzieheinrichtungen vorgesehenen Untersetzung für ein besonders feinfühliges Regeln.

Weiter wird durch die Bereichseingrenzung der Schärfen- und Blenden-Einstellung ermöglicht, den Schärfen- und Blendenring exakt und wiederholgenau auf die durch die Bereichsgrenzen definierten Einstellwerte zu positionieren, so dass bei der Wiederholung von Aufnahmeszenen mit definierten Anfangs- und Endbedingungen gearbeitet werden kann.

Neben einer numerischen Darstellung der jeweils eingestellten Bildschärfe, Brennweite oder Irisblendeneinstellung kann auch eine verstellbare, analoge Skalendarstellung auf der Bedieneinheit in Verbindung mit der Markierung bestimmter Einstellwerte vorgesehen werden, die als grafische Elemente dargestellt werden.

Die in der U.S. 4731630 beschriebene Anzeigeeinrichtung für eine Kamera weist eine Skala auf , auf welcher Einstellwerte als grafische Symbole, auf dem Skalenbereich oder ausserhalb des Skalenbereichs, dargestellt sind.

Diese bekannten Einstellmöglichkeiten und Anzeigen von an einem Kameraobjektiv eingestellten Werten der Bildschärfe, Brennweite oder Irisblendeneinstellung weisen aber insbesondere bezüglich der Bildschärfen- bzw. Fokuseinstellung einige Nachteile auf.

Zum einen ist beim Einsatz einer Markierscheibe am Umfang der Markierscheibe oft nicht genügend Platz vorhanden, um nahe beieinander liegende Einstellwerte präzise zu markieren. Zum anderen können bei einer Fernbedienung mit grafisch angezeigter Skala zwar die zu markierenden Einstellwerte präzise eingegeben werden, um sie aber klar und deutlich anzeigen zu können, muss die Skala entsprechend aufgespreizt werden. Da die Größe der Anzeigen der Bedieneinheiten aber wegen der für eine manuelle Bedienung beschränkten Größe der Bedieneinheiten eingeschränkt sind, kann jeweils nur ein kleiner Ausschnitt des gesamten Verstellbereichs des Kameraobjektivs auf dem Display oder Anzeigefenster der Bedieneinheiten dargestellt werden. Dies kann zur Folge haben, dass mit Markierungen versehene Einstellwerte aus dem Anzeigefenster der verstellbaren Skala verschwinden, wenn beispielsweise ein anderer Schärfenbereich einer die Bildschärfe anzeigenden Skala eingestellt wird. Will ein Benutzer die Schärfeneinstellung nun zurück zu einem markierten Einstellwert verstellen, ist es für den Benutzer sehr schwer, abzuschätzen, wie weit es jeweils bis zu der gewünschten Markierung ist, da sie erst kurz vor Erreichen des Einstellwertes in dem im Anzeigefenster eingestellten Einstellbereich der Skala erscheint.

Bei mehreren Markierungen ist das Auffinden gewünschter Markierungen für die Bedienperson noch unübersichtlicher, da die Bedienperson beim Erscheinen der jeweiligen Markierungen auch noch erkennen muss, ob es sich um die gewünschte, richtige Markierung handelt.

Aufgabe der vorliegenden Erfindung ist es daher, ein Verfahren zum Einstellen und zur Anzeige der Einstellung eines Kameraobjektivs der eingangs genannten Art anzugeben, das eine optimale Erkennbarkeit von Einstellwerten auf einer analogen, verstellbaren Skala bei beliebig positionierten Markierungen für Einstellwerte gewährleistet.

Diese Aufgabe wird erfindungsgemäß durch ein Verfahren mit den Merkmalen des Anspruchs 1 gelöst.

Die erfindungsgemäße Lösung ermöglicht durch beliebiges Variieren des Maßstabs einer analogen, verstellbaren Skala zur Anzeige von Einstellwerten eines Kameraobjektivs eine optimale Lesbarkeit und Erkennbarkeit der Einstellwerte sowie ein leichtes Setzen und Wiederauffinden von insbesondere mehreren Markierungen an beliebigen Positionen der verstellbaren, analogen Skala.

Durch das erfindungsgemäße Verfahren wird somit eine optimale Lesbarkeit für ein gegebenes Kameraobjektiv gewährleistet, indem der für das betreffende Kameraobjektiv optimale Maßstab bei der Darstellung der Einstellwerte im Anzeigefenster der verstellbaren, analogen Skala gewählt wird. Die durch eine entsprechende Eingabe an der Bedieneinheit markierten Einstellwerte verschwinden beim Verstellen der Skala nicht aus dem Anzeigefenster der Bedieneinheit, sondern werden am Rande der Skala angezeigt, so dass sie jederzeit im Sichtfeld des Benutzers sind und in den analogen Anzeigebereich der Skala wechseln, wenn sie beim Verstellen der analogen Skala in das Anzeigefenster gelangen.

Zur weiteren Optimierung der Lesbarkeit der Anzeige wird eine sich außerhalb des Anzeigefensters befindende Markierung an dem Ende der Skala angezeigt, an der sie sich auf einer virtuell erweiterten Skala befinden würde, so dass der Benutzer beim Verstellen der analogen Skala in leichter, übersichtlicher Weise erkennen kann, an welchem Ende des im Anzeigefenster angezeigten Skalenbereichs die Markierung in das Anzeigefenster wechseln wird und ob die Markierung einen zunehmenden oder abnehmenden Einstellwert kennzeichnet.

Eine weitere Verbesserung der Erkennbarkeit von Markierungen wird dadurch erzielt, dass die sich außerhalb des Anzeigefensters befindende Markierung senkrecht zur Ausrichtung der Skala dargestellt und ihr Abstand zur Skala in Abhängigkeit davon angezeigt wird, wie weit sich die betreffende Markierung außerhalb der virtuell erweiterten Skala befindet.

Durch diesen Verfahrensschritt wird dem Benutzer nicht nur die außerhalb des Anzeigebereichs befindliche Markierung angezeigt, sondern auch deren Abstand von dem im Anzeigefenster angezeigten Skalenbereich, so dass der Benutzer nicht von einem Wechsel der Markierung in dem im Anzeigefenster angezeigten Bereich der analogen Skala überrascht wird, sondern erkennen kann, wie weit außerhalb des im Anzeigefenster angezeigten Bereichs der analogen Skala sich die Markierung befindet.

Von besonderer Bedeutung ist diese Variante des erfindungsgemäßen Verfahrens bei mehreren Markierungen, die am Rand der analogen Skala so nebeneinander angeordnet werden, dass die am weitesten vom im Anzeigefenster angezeigten Bereich entfernte Markierung den größten Abstand von der Skala aufweist, während die dem Anzeigebereich nächstliegende Markierung entsprechend näher an der Skala liegend dargestellt wird.

Eine weitere Verbesserung der Erkennbarkeit von Markierungen wird dadurch erzielt, dass mehrere Einstellwerte durch Markierungen mit unterschiedlichen Symbolen und/oder Farben und/oder alphanumerische Zeichen dargestellt werden.

Mit dieser Darstellungsart wird erreicht, dass der Benutzer mit einem Blick auf das Anzeigefenster eine vollständige Übersicht über die gesetzten Markierungen und deren Abstand von dem im Anzeigefenster dargestellten Skalenbereich hat, wobei durch eine individuelle Zuordnung von Farben, Symbolen oder alphanumerischen Zeichen der Benutzer eine Sortierfolge bestimmen kann, die das Wiederauffinden und Anfahren bestimmter, durch Markierungen gekennzeichneter Einstellwerte erleichtert.

Eine weitere Verbesserung der Erkennbarkeit von Markierungen und Interpretation der im Anzeigefenster angezeigten analogen Skaleneinstellungen bzw. grafischen, alphanumerischen oder farblichen Symbole wird dadurch erzielt, dass die sich innerhalb des Anzeigefensters befindenden Markierungen mit größeren Symbolen und/oder alphanumerischen Zeichen neben ihrem zugehörigen Einstellwert dargestellt werden als die sich außerhalb des im Anzeigefenster angezeigten Bereichs befindenden Markierungen.

Um dem Benutzer das Nachverfolgen von Markierungen beim Verstellen der analogen Skala zu erleichtern, bewegen die sich innerhalb des Anzeigefensters befindenden Markierungen mit der Verstellung der analogen Skala mit und die den im Anzeigefenster angezeigten Bereich verlassenden Markierungen werden am jeweiligen Ende der Skala in die senkrecht zur Längsausrichtung der Skala ausgerichteten Markierungsbereiche verlagert, wobei der Abstand der jeweiligen Markierung in diesem Markierungsbereich von der Skala davon abhängt, wie weit außerhalb des im Anzeigefenster dargestellten Bereichs sich die betreffende Markierung in Bezug auf den aktuellen Einstellwert befindet.

Vorzugsweise werden die Markierungen durch Eingabe der den Markierungen zugeordneten Einstellwerte in eine Bedieneinheit des Kameraobjektivs gesetzt.

Neben der Anordnung von Markierungen an den ihnen zugeordneten Einstellwerten der verstellbaren, analogen Skala sowie in den senkrecht zur analogen Skala ausgerichteten Markierungsbereichen an den jeweiligen Enden der Skala können die Markierungen mit ihren unterschiedlichen Symbolen und/oder Farben und/oder alphanumerischen Zeichen in Verbindung mit den ihnen zugeordneten Einstellwerten zusätzlich in einer Tabelle neben der analogen Skala dargestellt werden, wobei die Reihenfolge der in der Tabelle dargestellten Markierungen und zugeordneten Einstellwerte der Reihenfolge auf der Skala entspricht.

Vorzugsweise wird der aktuelle Einstellwert in der Mitte des Anzeigefensters durch ein grafisches Zeichen, insbesondere durch eine die verstellbare, analoge Skala überdeckende Linie angegeben. Beispielsweise kann die Skala senkrecht verlaufend im Anzeigefenster dargestellt werden, während die Markierung des aktuellen Einstellwertes durch eine waagerechte Linie hervorgehoben wird, die etwa in der Mitte des im Anzeigefenster angezeigten Bereichs angeordnet ist.

In weiterer Ausgestaltung der erfindungsgemäßen Lösung kann der aktuelle Einstellwert in einem eingeblendeten Fenster als alphanumerisches Zeichen vergrößert dargestellt werden, d. h., der jeweils aktuelle Einstellwert wird beispielsweise in einem nach Art einer Sprechblase gestalteten Fenster vergrößert dargestellt, das mit einem Pfeil auf den analogen Einstellwert der verstellbaren Skala weist.

Wegen der Vielzahl möglicher Einstellwerte eignet sich das erfindungsgemäße Verfahren insbesondere für die Darstellung von Fokus- bzw. Bildschärfeeinstellungen. Hierbei erweist es sich als vorteilhaft, dass Einstellwerte für die Bildschärfe (Fokus) auf der Skala und parallel zur Ausrichtung der Skala Einstellwerte für die Irisblendenöffnung des Kameraobjektivs und die aktuellen Einstellwerte wie die Bildschärfe und Irisblendenöffnung in eingeblendeten Fenstern als alphanumerische Zeichen vergrößert dargestellt werden, die mit dem den aktuellen Einstellwert angebenden grafischen Zeichen fluchten.

Eine Vorrichtung zur Durchführung des Verfahrens weist mindestens eine Fokus-Antriebseinheit, Zoom-Antriebseinheit und Irisblenden-Antriebseinheit, eine mit der Fokus-Antriebseinheit, Zoom-Antriebseinheit und Irisblenden-Antriebseinheit über eine elektrische Leitung oder über eine Funkstrecke verbundenen Bedienungseinheit, die ein Anzeigefenster mit in einem Skalenbereich als numerische und/oder als grafische Symbole dargestellten Einstellwerten, eine Einrichtung zur Eingabe von Markierungen für ausgewählte Einstellwerte, eine Einrichtung zum Anfahren eingegebener Markierungen und eine das Anzeigefenster ansteuernde und Steuersignale für das Anfahren der Markierungen an die Fokus-Antriebseinheit, Zoom-Antriebseinheit und Irisblenden-Antriebseinheit abgebenden Steuereinrichtung enthält.

Anhand von in der Zeichnung dargestellten Ausführungsbeispielen, sollen der der Erfindung zugrundeliegende Gedanke näher erläutert und weitere Varianten der erfindungsgemäßen Lösung dargestellt werden. Es zeigen:
- Fig. 1 -: eine schematische Darstellung eines Steuer-, Regel- und Überwachungssystems für eine Laufbildkamera und ein Kameraobjektiv mit mehreren Bedieneinheiten und
- Fig. 2 -: eine schematische Darstellung des Bildaufbaus eines Anzeigefensters mit einer analogen Bildschärfeskala.

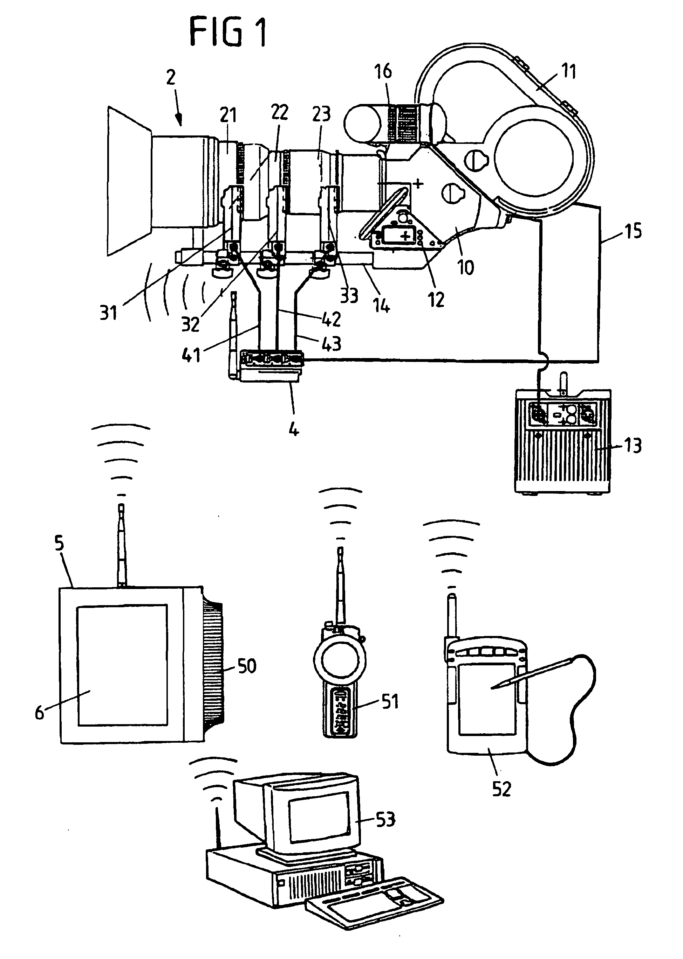

In Fig. 1 ist schematisch ein Steuer-, Regel- und Überwachungssystem für eine analoge oder digitale Laufbildkamera 1 dargestellt, das eine drahtlose (Funk-) oder alternativ kabelgebundene Steuerung und Überwachung von Kamerafunktionen sowie Einstell- und Anzeigefunktionen für ein Kameraobjektiv 2 ermöglicht.

Die Laufbildkamera 1 besteht aus einem Kameragehäuse 10 mit einem Kamerawerk zum Transport eines Laufbildfilms, einer rotierenden Blendenscheibe sowie Gehäuseanschlüssen für eine Kamerakassette 11, das Kameraobjektiv 2 und einen Kamerasucher 16 sowie ein Bedienfeld 12 zur Entstellung, Speicherung und zum Abruf verschiedener Kamerafunktionen. Auf zwei mit dem Kameragehäuse 10 verbundenen Irisstangen 14 sind eine Fokus-Antriebseinheit 31, eine Zoom-Antriebseinheit 32 und eine Irisblenden-Antriebseinheit 33 angeordnet, die beispielsweise entsprechend den Antriebseinheiten gemäß der DE 42 20 129 A1 ausgebildet sind. Die Stromversorgung der Laufbildkamera 1 erfolgt aus einem Akkumulator 13, der getrennt vom Kameragehäuse 10 oder in das Kameragehäuse 10 integriert angeordnet ist.

Das mit dem Objektivanschluss der Laufbildkamera 1 verbundene Kameraobjektiv 2 weist Objektivringe 21, 22, 23 auf, die mit den Antriebseinheiten 31, 32, 33 gekoppelt sind. Die Antriebseinheiten 31, 32, 33 empfangen vom Kameraobjektiv 2, das heißt über die Objektivringe 21, 22, 23 Daten über die Bildschärfen-, Zoom- und Irisblendeneinstellung des Kameraobjektivs 2 und treiben ihrerseits die Objektivringe 21, 22, 23 des Kameraobjektivs 2 an. Weiterhin geben die Antriebseinheiten 31, 32, 33 Erfassungssignale über die Istwerte der Bildschärfe, der Zoom-Einstellung und Irisblenden-Einstellung an die Laufbildkamera 1 bzw. eine kameraseitige Steuer- und Erfassungseinheit 4 ab und empfangen von der Laufbildkamera 1 bzw. der Steuer- und Erfassungseinheit 4 Signale für die Soll-Bildschärfe, Soll-Zoomeinstellung und Soll-Irisblendeneinstellung.

Die Steuer-, Regel- und Überwachungseinheit der Laufbildkamera 1 ist über eine Verbindungsleitung 15 mit der kameraseitigen Steuer- und Erfassungseinheit 4 verbunden, an die über Leitungen 41, 42, 43 auch die Fokus-Antriebseinheit 31, die Zoom-Antriebseinheit 32 und die Irisblenden-Antriebseinheit 33 angeschlossen sind. Die Steuer-, Regel- und Überwachungseinheit der Laufbildkamera 1 steuert und überwacht die verschiedenen Kamerafunktion wie Transportgeschwindigkeit des Laufbildfilms, Einstellung der Spiegelblende, Betätigung einer Videoausspielung, kassettenseitige Daten wie Art der Kassette, Länge des belichteten und unbelichteten Films, die Fokus-, Zoom- und lrisblenden-Einstellung des Kameraobjektivs 2 usw.

Die kameraseitige Steuer- und Erfassungseinheit 4 ist für einen Funk- und/oder Kabelbetrieb ausgelegt und dementsprechend über eine Funk- und/oder Kabelverbindung mit Bedienungseinheiten 5, 51, 52, 53 verbunden. Von der Laufbildkamera 1 bzw. der Steuer- und Erfassungseinheit 4 werden Signale über die aktuellen Einstellwerte des Kameraobjektivs 2 und der Laufbildkamera 1 an die Bedienungseinheiten 5, 51, 52, 53 abgegeben und Signale über die angewählten Objektivwerte, die angewählten Kamerawerte und errechnete Kombinationswerte, wie beispielsweise die Iris-Bildfrequenz empfangen.

Auf der Bedienungsseite ist eine erste Bedienungseinheit 5 vorgesehen, die der Einstellung und Anzeige der Bildschärfe bzw. des Fokus des Kameraobjektivs 2 dient und auch als "Schärfenzieheinrichtung" bezeichnet wird. Zusätzlich kann die Bedienungseinheit 5 aber auch zur Zoom- und Irisblendeneinstellung des Kameraobjektivs 2 eingesetzt werden. Eine zweite Bedienungseinheit 51 dient beispielsweise zur Einstellung von Kamerafunktionen, alternativ oder zusätzlich aber auch zur Zoom- und Irisblendeneinstellung des Kameraobjektivs 2. Eine dritte Bedienungseinheit 52 ist als "Pen-Based-Computer" ausgelegt, das als Handterminal zur Datenübertragung nicht nur zur Eingabe von Steuerbefehlen, sondern vor allem zur Durchführung von Überwachungsfunktionen, d.h. zur Anzeige und Speicherung kamera- und aufnahmespezifischer Daten dient. Eine dritte Bedienungseinheit 53 ist als Workstation ausgebildet, die die Anzeige, Überwachung und Protokollierung sämtlicher kamera- und aufnahmespezifischer Daten durchführt und die Eingabe von Steuerbefehlen ermöglicht, Prioritäten der Bedienungseinheiten 5, 51 und 52 vorgibt usw.

Nachstehend wird auf die Bedienungseinheit 5 Bezug genommen, die der Einstellung und Anzeige der Bildschärfe bzw. des Fokus und Anzeige der Irisblenden-Einstellung des Kameraobjektivs 2 dient. Diese beispielhafte Bezugnahme auf die Bildschärfe und Irisblendeneinstellung des Kameraobjektivs 2 kann selbstverständlich auch auf andere Einstellungen des Kameraobjektivs 2 angewandt bzw. erweitert werden.

Die Bedienungseinheit bzw. Schärfenzieheinrichtung 5 ist als Handbedieneinheit konzipiert und weist ein Einstellrad 50 zur Fokusseinstellung sowie ein Anzeigefenster 6 auf, in dem der aktuelle Einstellwert der Bildschärfe bzw. des Fokus des Kameraobjektivs 2 analog und/oder digital angezeigt wird. Durch Drehen des Einstellrades 50 in der einen oder anderen Drehrichtung können beispielsweise Sollwerte für die Fokuseinstellung eingegeben und durch Drücken des Einstellrades 50 in axialer Richtung Markierungen gesetzt werden. Zusätzlich oder alternativ kann das Anzeigefenster 6 als berührungsempfindlicher Bildschirm ausgebildet sein, so dass Einstellungen im Anzeigefenster 6 selbst vorgenommen werden können.

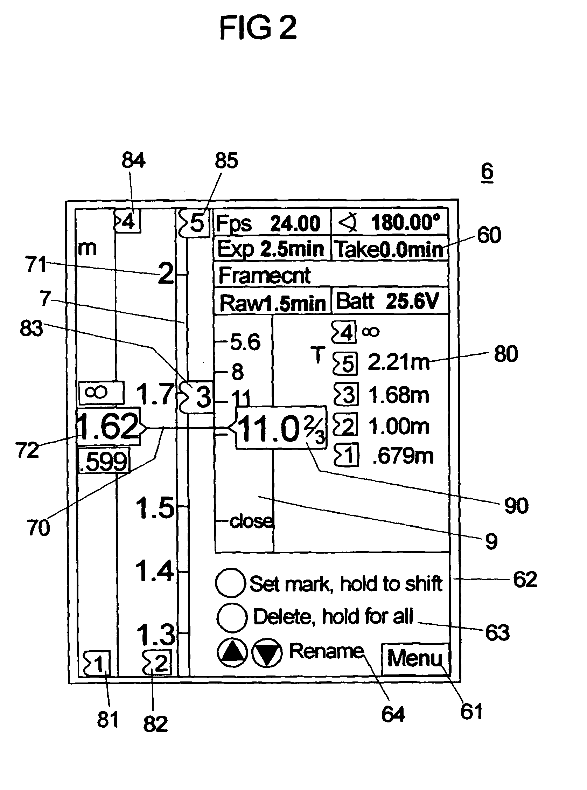

Fig. 2 zeigt in schematischer Darstellung ein Beispiel für den Bildaufbau und die Dateneingabe bei einem als berührungsempfindlicher Bildschirm ausgebildeten Anzeigefenster 6 gemäß Fig. 1.

Das Anzeigefenster 6 der Bedienungseinheit 5 weist eine als senkrechter Balken ausgebildete analoge Bildschärfeskala 7 mit daran eingetragenen Einstellwerten 71 für die Bildschärfe bzw. den Fokus des Kameraobjektivs 2 auf. Die analoge Skala 7 ist beispielsweise mittels des Handrades 5 verstellbar, so dass die Einstellwerte 71 in der in Fig. 2 dargestellten Draufsicht auf das Anzeigefenster 6 in Abhängigkeit von der Drehrichtung des Handrades 5 nach oben oder unten verlagert werden. Der jeweilige Istwert der Bildschärfeneinstellung wird durch einen waagerechten Strich 70 für die analoge Anzeige des eingestellten Bildschärfe-Einstellwertes markiert bzw. numerisch in vergrößerter Darstellung in einem nach Art einer Sprechblase ausgebildeten, eingeblendeten Fenster 72 angegeben.

Zusätzlich ist in dem Anzeigefenster 6 ein Fenster 60 eingeblendet, in dem Daten der Laufbildkamera wie die Bildfrequenz, der Winkel der rotierenden Spiegelblende, die Zeitdauer eines Takes, die Batteriespannung usw. angezeigt werden. In einer weiteren Skala 9 sind Einstellwerte der Irisblendeneinstellung dargestellt, die in Bezug auf den waagerechten Strich 70 zur Anzeige des Istwertes der Bildschärfeneinstellung in einer vergrößerten numerischen Darstellung in einem nach Art einer Sprechblase ausgebildeten Fenster 90 angezeigt werden.

In einem weiteren Bereich 63 des berührungsempfindlichen Anzeigefensters 6 sind Symbole zur Einstellung, zum Löschen und Umbenennen von Einstellwerten und Markierungen angegeben.

Zur Markierung von Einstellwerten 71 der Bildschärfe dienen Markierungssymbole 81 bis 85, die mit unterschiedlichen Ziffern und vorzugsweise auch unterschiedlichen Farben zur deutlichen Unterscheidung versehen sind. In Fig. 2 sind beispielhaft fünf Markierungen 81 bis 85 eingetragen, in denen die Markierung 81 mit "1" bezeichnet wird und einen Einstellwert von 0,679 m markiert, die Markierung 82 mit "2" bezeichnet wird und eine Einstellung von 1,00 m markiert, die Markierung 83 mit "3" bezeichnet wird und eine Einstellung von 1,68 m markiert, die Markierung 84 mit "4" bezeichnet wird und die Einstellung ∞ markiert und die Markierung 85 mit "5" bezeichnet wird und einen Einstellwert von 2,21 m für die Bildschärfe angibt.

Die im Einstellbereich des Anzeigefensters 6 befindlichen Markierungen 81, 82 werden mit vergrößerten Symbolen beispielsweise in quadratischen Feldern mit einer Einkerbung neben dem auf der analogen Skala 7 angegebenen Einstellwert 71 dargestellt und mit der Skala 7 mitbewegt.

Da sich der im Anzeigefenster 6 dargestellte Skalenbereich von ca. 1,3 m bis 2,5 m erstreckt, sind die Markierungen 83 und 85 innerhalb des Skalenbereichs als vergrößerte Markierungen dargestellt, während sich die Markierungen 81, 82 und 84 außerhalb des angezeigten Skalenbereichs befinden und an einem der beiden Enden der analogen Skala 7 am oberen und unteren Rand des Anzeigefensters 6 senkrecht zur Ausrichtung der Skala 7 in einem Markierungsbereich dargestellt werden.

Dabei werden die sich außerhalb des im Anzeigefenster 6 im Markierungsbereich dargestellten Markierungen 81, 82 und 84 an dem Ende der analogen Skala 7 dargestellt, an dem sie sich auf einer virtuell erweiterten Skala 7 befinden würden. Die außerhalb des Skalenbereichs befindlichen Markierungen 81, 82 und 84 sind horizontal relativ zur Skala 7 verschoben, um darzustellen, wie weit außerhalb des im Anzeigefenster 6 angezeigten Skalenbereichs sich die betreffenden Markierungen 81, 82 und 84 momentan, das heißt in Bezug auf den jeweils eingestellten Istwert der Bildschärfeneinstellung, befinden. Wie der Fig. 2 am unteren Rand des Anzeigefensters 6 zu entnehmen ist, werden die beiden sich außerhalb des im Anzeigefenster 6 angezeigten Skalenbereichs befindlichen Markierungen 81 und 82 für die Fokuseinstellungen 0,679m und 1,00m in der richtigen Reihenfolge im unteren Markierungsbereich in einem Abstand von der analogen Skala 7 dargestellt, der ihrer Abfolge bei einer virtuell erweiterten analogen Skala 7 entsprechen würde.

Zusätzlich werden die Markierungen 81 bis 85 in der Reihenfolge der mit ihnen gekennzeichneten Einstellwerte in einer Markierungstabelle 80 von oben nach unten mit abnehmenden Einstellwerten (oder umgekehrt mit zunehmenden Einstellwerten) angezeigt.

Der momentane Istwert der Bildschärfen-Einstellung von 1,62 m ist in dem nach Art einer Sprechblase ausgebildeten Anzeigefenster 72 vergrößert numerisch dargestellt. Oberhalb und unterhalb des nach Art einer Sprechblase dargestellten Anzeigefensters 72 sind die Bereichsgrenzen für die Bildschärfeneinstellung des Kameraobjektivs 2 angezeigt, beispielsweise die Werte 0,559 m für den minimalen und ∞ für den maximalen Fokus. Das ebenfalls nach Art einer Sprechblase ausgebildete Anzeigefenster mit der numerischen Anzeige der Irisblendeneinstellung zeigt den momentanen Einstellwert von 11.0 2/3 für die Irisblendeneinstellung an.

Die Skala 7 lässt sich somit im Maßstab beliebig variieren, um eine optimale Lesbarkeit der Einstellwerte 71 und Markierungen 81 bis 85 für das jeweils eingesetzte Kameraobjektiv 2 zu ermöglichen. Die aktuelle Schärfeneinstellung wird sowohl als numerischer Wert in einem eingeblendeten Fenster 72 als auch als Einstellwert 71 auf der analogen Skala 7 dargestellt und bestimmte Einstellwerte 71 können durch Betätigen des berührungsempfindlichen Symbols 62 im berührungsempfindlichen Anzeigefenster 6 markiert, durch Betätigen des berührungsempfindlichen Symbols 63 gelöscht und durch Betätigen der berührungsempfindlichen Symbole 64 verändert werden. Zusätzlich ist durch Antippen des Feldes 61 ein Wechsel in ein Menu möglich, das verschiedene Anwendungen, Anzeigen und Einstellungen vorgibt.

Durch die erfindungsgemäße Ausführung der Anzeige behält der Benutzer die Übersicht über die markierten Einstellwerte. Beim Verstellen des Schärfenbereichs kann der Benutzer erkennen, welche Markierungen in welcher Reihenfolge erreicht werden, auch wenn diese noch nicht im angezeigten Skalenbereich dargestellt werden. Ferner bekommt der Benutzer einen Hinweis darauf, wie weit noch verstellt werden muss, bis die jeweiligen Markierungen erreicht werden.

### Bezugszeichenliste

- 1: Laufbildkamera
- 2: Kameraobjektiv
- 4: kameraseitige Steuer- und Erfassungseinheit
- 5: Bildschärfe-Bedienungseinheit ("Schärfenzieheinrichtung")
- 6: Anzeigefenster
- 7: Bildschärfeskala
- 9: Irisblendenskala
- 10: Kameragehäuse
- 11: Kamerakassette
- 12: Bedienfeld
- 13: Akkumulator
- 14: Irisstangen
- 15: Leitung
- 16: Kamerasucher
- 21, 22, 23: Objektivringe
- 31: Fokus-Antriebseinheit
- 32: Zoom-Antriebseinheit
- 33: Irisblenden-Antriebseinheit
- 41,42,43: Leitungen
- 50: Handrad
- 51, 52, 53: Bedienungseinheiten
- 61 - 64: berührungsempfindliche Symbole
- 71: Einstellwerte
- 72: Eingeblendetes Fenster für den aktuellen Fokus-Einstellwert
- 80: Markierungstabelle
- 81 - 85: Markierungen
- 90: Eingeblendetes Fenster für den aktuellen Irisblenden-Einstellwert

## Patentansprüche

1. Verfahren zum Einstellen und zur Anzeige der Einstellung eines Kameraobjektivs (2), insbesondere zur Einstellung der Bildschärfe (Fokus) eines Kameraobjektivs (2) für analoge oder digitale Laufbildkameras (1), mit einer relativ zur Anzeige eines aktuellen Einstellwertes verstellbaren, mit einer Einstellvorrichtung (50, 61 - 64) gekoppelten Skala (7), auf der Einstellwerte numerisch und/oder als grafische Symbole dargestellt sind, und von der sich ein an den aktuellen Einstellwert angrenzender Skalenbereich in einem Anzeigefenster (6) befindet, wobei mindestens ein Einstellwert (71) durch eine Markierung (81 - 85) hervorgehoben und eine sich außerhalb des Anzeigefensters (6) befindende Markierung (81, 82, 84) an dem Ende der Skala (7) angezeigt wird, an dem sie sich auf einer virtuell erweiterten Skala (7) befinden würde,
**dadurch gekennzeichnet,**
**dass** die sich außerhalb des Anzeigefensters (6) befindende Markierung (81, 82, 84) senkrecht zur Ausrichtung der Skala (7) dargestellt und ihr Abstand zur Skala (7) in Abhängigkeit davon angezeigt wird, wie weit sich die Markierung (81, 82, 84) außerhalb der virtuell erweiterten Skala (7) befindet.

2. Verfahren nach Anspruch 1, **dadurch gekennzeichnet, dass** mehrere Einstellwerte (71) durch Markierungen (81 - 85) mit unterschiedlichen Symbolen und/oder Farben und/oder alphanumerische Zeichen dargestellt werden.

3. Verfahren nach Anspruch 1 oder 2, **dadurch gekennzeichnet, dass** Markierungen (81, 82, 84) für Einstellwerte (71), die sich außerhalb des Anzeigefensters (6) befinden, senkrecht zur Ausrichtung der Skala (7) dargestellt werden, wobei der Abstand der jeweiligen Markierung (81 - 85) von der Skala (7) davon abhängt, wie weit außerhalb des Anzeigefensters (6) sich die betreffende Markierung (81 - 85) in Abhängigkeit vom aktuellen Einstellwert (71) befindet.

4. Verfahren nach Anspruch 3, **dadurch gekennzeichnet, dass** die sich außerhalb des Anzeigefensters (6) befindenden Markierungen (81, 82, 84) ausgehend von der Skala (7) senkrecht zur Skala (7) in der Reihenfolge der zu- oder abnehmenden Einstellwerte (71) dargestellt werden.

5. Verfahren nach mindestens einem der vorangehenden Ansprüche, **dadurch gekennzeichnet, dass** die sich innerhalb des Anzeigefensters (6) befindenden Markierungen (83, 85) mit größeren Symbolen und/oder alphanumerischen Zeichen neben ihrem zugehörigen Einstellwert (71) dargestellt werden als die sich außerhalb des Anzeigefensters (6) befindenden Markierungen (81, 82, 84).

6. Verfahren nach mindesten einem der vorangehenden Ansprüche, **dadurch gekennzeichnet, dass** die sich innerhalb des Anzeigefensters (6) befindenden Markierungen (83, 85) mit der Verstellung der Skala (7) mitbewegen und die das Anzeigefenster (6) verlassenden Markierungen (81, 82, 84) am jeweiligen Ende der Skala (7) in senkrecht zur Längsausrichtung der Skala (7) verlaufende Anzeigebereiche verlagert werden, wobei der Abstand der jeweiligen Markierung (81, 82, 84) von der Skala (7) davon abhängt, wie weit außerhalb des Anzeigefensters (6) sich die betreffende Markierung (81, 82, 84) in Bezug auf den aktuellen Einstellwert befindet.

7. Verfahren nach mindestens einem der vorangehenden Ansprüche, **dadurch gekennzeichnet, dass** die Markierungen (81 - 85) durch Eingabe der den Markierungen (81 - 85) zugeordneten Einstellwerte (71) in eine Bedienungseinheit (5; 51 - 53) gesetzt werden.

8. Verfahren nach mindestens einem der vorangehenden Ansprüche, **dadurch gekennzeichnet, dass** die Markierungen (81 - 85) mit ihren unterschiedlichen Symbolen und/oder Farben und/oder alphanumerischen Zeichen in Verbindung mit den ihnen zugeordneten Einstellwerten (71) zusätzlich in einer Markierungstabelle (80) neben der Skala (7) dargestellt werden.

9. Verfahren nach Anspruch 8, **dadurch gekennzeichnet, dass** die Reihenfolge der in der Markierungstabelle (80) dargestellten Markierungen (81 - 85) und zugeordneten Einstellwerte (71) der Reihenfolge auf der Skala (7) entspricht.

10. Verfahren nach mindestens einem der vorangehenden Ansprüche, **dadurch gekennzeichnet, dass** der aktuelle Einstellwert durch ein grafisches Zeichen angegeben wird, das sich im Wesentlichen in der Mitte des Anzeigefensters (6) befindet.

11. Verfahren nach Anspruch 10, **dadurch gekennzeichnet, dass** das den aktuellen Einstellwert angebende grafische Zeichen die Skala (7) überdeckt.

12. Verfahren nach Anspruch 10 oder 11, **dadurch gekennzeichnet, dass** der aktuelle Einstellwert in einem eingeblendeten Fenster (72) als alphanumerisches Zeichen vergrößert dargestellt wird.

13. Verfahren nach mindestens einem der vorangehenden Ansprüche, **dadurch gekennzeichnet, dass** Einstellwerte für die Bildschärfe (Fokus) auf der Skala (7) und parallel zur Ausrichtung der Skala (7) Einstellwerte für die Irisblendenöffnung des Kameraobjektivs (2) dargestellt werden und dass die aktuellen Einstellwerte (71) wie die Bildschärfe und Irisblendenöffnung in eingeblendeten Fenstern (72, 90) als alphanumerische Zeichen vergrößert dargestellt werden, die mit dem den aktuellen Einstellwert angebenden grafischen Zeichen fluchten.

14. Vorrichtung zur Durchführung des Verfahrens nach mindestens einem der vorangehenden Ansprüche mit mindestens einer Fokus-Antriebseinheit (31), Zoom-Antriebseinheit (32) und Irisblenden-Antriebseinheit (33), einer mit der Fokus-Antriebseinheit (31), Zoom-Antriebseinheit (32) und Irisblenden-Antriebseinheit (33) über eine elektrische Leitung oder über eine Funkstrecke verbundenen Bedienungseinheit (5; 51 - 53), die ein Anzeigefenster (6) mit in einem Skalenbereich als numerische und/oder als grafische Symbole dargestellten Einstellwerten (71), eine Einrichtung zur Eingabe von Markierungen (81 - 85) für ausgewählte Einstellwerte (71), eine Einrichtung zum Anfahren eingegebener Markierungen (81 - 85) und eine das Anzeigefenster (6) ansteuernde und Steuersignale für das Anfahren der Markierungen (81 - 85) an die Fokus-Antriebseinheit (31), Zoom-Antriebseinheit (32) und Irisblenden-Antriebseinheit (33) abgebende Steuereinrichtung enthält.

15. Vorrichtung nach Anspruch 14, **dadurch gekennzeichnet, dass** die Fokus-Antriebseinheit (31), Zoom-Antriebseinheit (32) und Irisblenden-Antriebseinheit (33) mit einem zugeordneten Objektivring (21, 22, 23) des Kameraobjektivs (2) gekoppelt sind, Daten über die Bildschärfen-, Zoom- und Irisblendeneinstellung des Kameraobjektivs (2) empfangen und die Objektivringe (21, 22, 23) des Kameraobjektivs (2) zum Einstellen von Sollwerten der Bildschärfen-, Zoom- und Irisblendeneinstellung des Kameraobjektivs (2) antreiben.

16. Vorrichtung nach Anspruch 15, **dadurch gekennzeichnet, dass** die Fokus-Antriebseinheit (31), Zoom-Antriebseinheit (32) und Irisblenden-Antriebseinheit (33) Erfassungssignale der Istwerte der Bildschärfe, der Zoom-Einstellung und lrisblenden-Einstellung an die Laufbildkamera (1) oder eine kameraseitige Steuer- und Erfassungseinheit (4) abgeben und von der Laufbildkamera (1) oder der Steuer- und Erfassungseinheit (4) Sollwerte für die Bildschärfe, Zoomeinstellung und Irisblendeneinstellung empfangen.

## Claims

1. A method for adjusting and for displaying the adjustment of a camera lens (2), in particular for adjusting the image sharpness (focus) of a camera lens (2) for analog or digital motion picture cameras (1), comprising a scale (7) shiftable relative to the display of a current adjustment value and coupled with an adjusting device (50, 61-64), on which scale the adjustment values are represented numerically and/or as graphical symbols, and of which a scale range bordering on the current adjustment value is located in a display window (6), wherein at least one adjustment value (71) is highlighted by a marking (81-85) and a marking (81, 82, 84) located outside the display window (6) is displayed at the edge of the scale (7) at which it would be located on a virtually expanded scale (7),
**characterized in**
**that** the marking (81, 82, 84) located outside the display window (6) is represented vertical to the orientation of the scale (7) and its distance to the scale (7) is indicated in dependence on how far outside the virtually expanded scale (7) the respective marking (81, 82, 84) is located.

2. The method according to claim 1, **characterized in that** a plurality of adjustment values (71) are represented by markings (81-85) with different symbols and/or colors and/or alphanumeric characters.

3. The method according to claims 1 or 2, **characterized in that** markings (81, 82, 84) for adjustment values (71) which are located outside the display window (6) are represented vertical to the orientation of the scale (7), wherein the distance of the respective marking (81-85) from the scale (7) depends on how far outside the display window (6) the respective marking (81-85) is located in dependence on the current adjustment value (71).

4. The method according to claim 3, **characterized in that** proceeding from the scale (7) the markings (81, 82, 84) located outside the display window (6) are represented vertical to the scale (7) in the order of the increasing or decreasing adjustment values (71).

5. The method according to at least one of the preceding claims, **characterized in that** the markings (83, 85) located inside the display window (6) are represented with larger symbols and/or alphanumeric characters beside their associated adjustment value (71) than the markings (81, 82, 84) located outside the display window (6).

6. The method according to at least one of the preceding claims, **characterized in that** the markings (83, 85) located inside the display window (6) move along with the shifting of the scale (7) and the markings (81, 82, 84) leaving the display window (6) at the respective end of the scale (7) are shifted into display regions extending vertical to the longitudinal orientation of the scale (7), wherein the distance of the respective marking (81, 82, 84) from the scale (7) depends on how far outside the display window (6) the respective marking (81, 82, 84) is located with respect to the current adjustment value.

7. The method according to at least one of the preceding claims, **characterized in that** the markings (81-85) are set by entering the adjustment values (71) associated to the markings (81-85) into an operating unit (5; 51-53).

8. The method according to at least one of the preceding claims, **characterized in that** the markings (81-85) with their different symbols and/or colors and/or alphanumeric characters in conjunction with their associated adjustment values (71) are additionally represented in a marking table (80) beside the scale (7).

9. The method according to claim 8, **characterized in that** the order of the markings (81-85) and associated adjustment values (71) represented in the marking table (80) corresponds to the order on the scale (7).

10. The method according to at least one of the preceding claims, **characterized in that** the current adjustment value is indicated by a graphical symbol which substantially is located in the middle of the display window (6).

11. The method according to claim 10, **characterized in that** the graphical symbol indicating the current adjustment value covers the scale (7).

12. The method according to claim 10 or 11, **characterized in that** the current adjustment value is shown enlarged as an alphanumeric character in a window (72) faded in.

13. The method according to at least one of the preceding claims, **characterized in that** adjustment values for the image sharpness (focus) are represented on the scale (7) and parallel to the orientation of the scale (7) adjustment values for the iris opening of the camera lens (2) are represented and that the current adjustment values (71) such as image sharpness and iris opening are shown enlarged as alphanumeric characters in windows (72, 90) faded in, which alphanumeric characters are aligned with the graphical symbol indicating the current adjustment value.

14. An apparatus for carrying out the method according to at least one of the preceding claims, comprising at least one focus drive unit (31), zoom drive unit (32) and iris drive unit (33), an operating unit (5; 51-53) connected with the focus drive unit (31), zoom drive unit (32) and iris drive unit (33) via an electric line or via a radio link, which contains a display window (6) with adjustment values (71) represented as numerical and/or graphical symbols in a scale range, a means for entering markings (81-85) for selected adjustment values (71), a means for selecting entered markings (81-85) and a control means actuating the display window (6) and outputting control signals for selecting the markings (81-85) to the focus drive unit (31), zoom drive unit (32) and iris drive unit (33).

15. The apparatus according to claim 14, **characterized in that** the focus drive unit (31), zoom drive unit (32) and iris drive unit (33) are coupled with an associated lens ring (21, 22, 23) of the camera lens (2), receive data on the image sharpness, zoom and iris adjustment of the camera lens (2) and drive the lens rings (21, 22, 23) of the camera lens (2) for adjusting desired values of the image sharpness, zoom and iris adjustment of the camera lens (2).

16. The apparatus according to claim 15, **characterized in that** the focus drive unit (31), zoom drive unit (32) and iris drive unit (33) output detection signals of the actual values of the image sharpness, the zoom adjustment and the iris adjustment to the motion picture camera (1) or a camera-side control and detection unit (4) and receive desired values for the image sharpness, zoom adjustment and iris adjustment from the motion picture camera (1) or the control and detection unit (4).

## Revendications

1. Procédé pour régler et pour afficher le réglage d'un objectif de caméra (2), en particulier pour régler la netteté d'une image (focalisation) d'un objectif de caméra (2) pour des caméras cinématographiques analogiques ou numériques (1), comprenant une échelle (7) déplaçable par rapport à l'affichage d'une valeur de réglage actuel et couplée à un dispositif de réglage (50, 61-64), sur laquelle sont représentées les valeurs de réglage sous forme numérique et/ou sous forme de symboles graphiques, échelle dont une zone adjacente à la valeur de réglage actuelle se trouve dans une fenêtre d'affichage (6), dans lequel au moins une valeur de réglage (71) est soulignée par un marquage (81-85) et un marquage (81, 82, 84) qui se trouve à l'extérieur de la fenêtre d'affichage (6) est affiché à la fin de l'échelle (7) à laquelle le marquage se trouverait à une échelle (7) virtuellement élargie,
**caractérisé en ce que** le marquage (81, 82, 84) qui se trouve à l'extérieur de la fenêtre d'affichage (6) est illustré perpendiculairement à l'orientation de l'échelle (7) et sa distance par rapport à l'échelle (7) est affichée en fonction de l'éloignement auquel le marquage (81, 82, 84) se trouve à l'extérieur de l'échelle (7) virtuellement élargie.

2. Procédé selon la revendication 1, **caractérisé en ce que** plusieurs valeurs de réglage (71) sont illustrées par des marquages (81-85) avec des symboles et/ou des couleurs différent(e)s et/ou des signes alphanumériques différents.

3. Procédé selon la revendication 1 ou 2, **caractérisé en ce que** des marquages (81, 82, 84) pour des valeurs de réglage (71) qui se trouvent à l'extérieur de la fenêtre d'affichage (6) sont affichés perpendiculairement à l'orientation de l'échelle (7), et la distance du marquage respectif (81-85) depuis l'échelle (7) dépend de l'éloignement auquel le marquage concerné (81-85) se trouve à l'extérieur de la fenêtre d'affichage (6) en fonction de la valeur de réglage actuelle (71).

4. Procédé selon la revendication 3, **caractérisé en ce que** des marquages (81, 82, 84) qui se trouvent à l'extérieur de la fenêtre d'affichage (6) sont illustrés, en partant de l'échelle (7) et perpendiculairement à l'échelle (7), dans la succession des valeurs de réglage (71) croissantes ou décroissantes.

5. Procédé selon l'une au moins des revendications précédentes, **caractérisé en ce que** les marquages (83, 85) qui se trouvent à l'intérieur de la fenêtre d'affichage (6) sont représentés avec des symboles de plus grande taille et/ou des signes alphanumériques de plus grande taille à côté de leur valeur de réglage associée (71), que les marquages (81, 82, 84) qui se trouvent à l'extérieur de la fenêtre d'affichage (6).

6. Procédé selon l'une au moins des revendications précédentes, **caractérisé en ce que** les marquages (83, 85) qui se trouvent à l'intérieur de la fenêtre d'affichage (6) se déplacent conjointement avec le déplacement de l'échelle (7), et les marquages (81, 82, 84) qui quittent la fenêtre d'affichage (6) sont déportés à l'extrémité respective de l'échelle (7) dans des zones d'affichage s'étendant perpendiculairement à l'orientation longitudinale de l'échelle (7), et la distance du marquage respectif (81, 82, 84) depuis l'échelle (7) dépend de l'éloignement auquel le marquage concerné (81, 82, 84) se trouve à l'extérieur de la fenêtre d'affichage (6), par référence à la valeur de réglage actuelle.

7. Procédé selon l'une au moins des revendications précédentes, **caractérisé en ce que** les marquages (81-85) sont posées par entrée des valeurs de réglage (71) associées aux marquages (41-85) dans une unité de service (5 ; 51-53).

8. Procédé selon l'une au moins des revendications précédentes, **caractérisé en ce que** les marquages (81-85) avec leurs symboles et/ou leur couleurs différent(e)s et/ou leurs signes alphanumériques différents sont représentés en liaison avec les valeurs de réglage (71) qui leur sont associées, de façon supplémentaire dans un tableau de marquage (80) à côté de l'échelle (7).

9. Procédé selon la revendication 8, **caractérisé en ce que** la succession des marquages (81-85) représentés dans le tableau de marquage (80) et des valeurs de réglage associées (71) correspond à la succession sur l'échelle (7).

10. Procédé selon l'une au moins des revendications précédentes, **caractérisé en ce que** la valeur de réglage actuelle est indiquée par un signe graphique qui se trouve sensiblement au milieu de la fenêtre d'affichage (6).

11. Procédé selon la revendication 10, **caractérisé en ce que** le signe graphique indiquant la valeur de réglage actuelle recouvre l'échelle (7).

12. Procédé selon la revendication 10 ou 11, **caractérisé en ce que** la valeur de réglage actuelle est représentée dans une fenêtre superposée (72) de manière agrandie sous forme d'un signe alphanumérique.

13. Procédé selon l'une au moins des revendications précédentes, **caractérisé en ce que** des valeurs de réglage pour la netteté (focalisation) sont représentées sur l'échelle (7) et des valeurs de réglage pour l'ouverture du diaphragme de l'objectif de caméra (2) sont représentées parallèlement à l'orientation de l'échelle (7), et **en ce que** les valeurs de réglage actuelles (71) comme la netteté et l'ouverture du diaphragme sont représentées dans des fenêtres superposées (72, 90) sous forme de signes alphanumériques agrandis, qui sont alignés avec le signe graphique indiquant la valeur de réglage actuelle.

14. Dispositif pour la mise en oeuvre du procédé selon l'une au moins des revendications précédentes, comprenant au moins une unité d'entraînement de focalisation (31), une unité d'entraînement de zoom (32) et une unité d'entraînement de diaphragme (33), une unité de service (5 ; 51-53), reliée à l'unité d'entraînement de focalisation (31), à l'unité d'entraînement de zoom (32) et à l'unité d'entraînement de diaphragme (33) via une ligne électrique ou via une liaison radio, qui contient une fenêtre d'affichage (6) avec des valeurs de réglage (71) représentées dans une zone d'échelle sous forme de symboles numériques et/ou graphiques, un moyen pour l'entrée de marquages (81-85) pour des valeurs de réglage choisies (71), un moyen pour sélectionner de marquages entrés (81-85) et un moyen de commande qui pilote la fenêtre d'affichage (6) et qui délivre des signaux de commande pour la sélection de marquages (81-85) à l'unité d'entraînement de focalisation (31), à l'unité d'entraînement de zoom (32) et à l'unité d'entraînement de diaphragme (33).

15. Dispositif selon la revendication 14, **caractérisé en ce que** l'unité d'entraînement de focalisation (31), l'unité d'entraînement de zoom (32) et l'unité d'entraînement de diaphragme (33) sont couplées à une bague objectif associée (21, 22, 23) de l'objectif de caméra (2), reçoivent des données concernant le réglage de netteté, le réglage de zoom et le réglage de diaphragme de l'objectif des caméras (2), et entraînent les bagues objectif (21, 22, 23) de l'objectif de caméra (2) pour régler des valeurs de consigne du réglage de netteté, du réglage de zoom et du réglage de diaphragme de l'objectif de caméra (2).

16. Dispositif selon la revendication 15, **caractérisé en ce que** l'unité d'entraînement de focalisation (31), l'unité d'entraînement de zoom (32) et l'unité d'entraînement de diaphragme (33) délivrent des signaux de constatation des valeurs réelles de la netteté, du réglage de zoom et de réglage de diaphragme à la caméra cinématographique (1) ou à une unité de commande et de constatation (4) côté caméra, et des valeurs de consigne pour la netteté, le réglage de zoom et le réglage de diaphragme sont reçues par la caméra cinématographique (1) ou par l'unité de commande et de constatation (4).
